# EUROPEAN PATENT SPECIFICATION

(11) **EP 3 244 174 B1**
(45) Date of publication and mention of the grant of the patent: **01.04.2020**
(21) Application number: 17169463.1
(22) Date of filing: 04.05.2017
(51) Int. Cl.: G01F 13/00, B01F 15/02

(54) **INTELLIGENT MODULAR METERING SYSTEM**
INTELLIGENTES MODULARES MESSSYSTEM
SYSTÈME DE MESURE MODULAIRE INTELLIGENT

(30) Priority: 11.05.2016 TW 105114548
(43) Date of publication of application: 15.11.2017
(73) Proprietor: Logic Art Automation Co., LTD., New Taipei City (TW)
(72) Inventor: HU, Hugo, New Taipei City (TW)
(74) Representative: Viering, Jentschura & Partner mbB Patent- und Rechtsanwälte

(56) References cited:
- EP-A2- 0 299 522
- CN-U- 203 247 415
- US-A1- 2015 298 839

## Description

### BACKGROUND OF THE INVENTION

### 1. Field of the Invention:

The present invention relates to metering technology and more particularly, to an intelligent modular metering system, allows different forms of ingredients of one same formula to be metered in the intelligent modular metering system, and also allows changing or increasing the number of ingredients.

### 2. Description of the Related Art:

At present, in the chemical industry, food industry, pharmaceutical industry and textile dyeing industry, liquid, powder and other ingredients are often used for the production of final products. These ingredients need to be metered according to a predetermined proportion so that they can achieve the expected chemical reaction, that is, ingredients must be metered before batch production, especially in micro-precision metering, and how to rapidly and accurately meter the ingredients has always been a matter of concern to the industry.

Taiwan Patent M459248 and 1454666, issued to the present invention, disclose a metering system entitled "Powder and liquid automatic metering system" for improving the metering problems of conventional techniques. The batch production in current chemical industry, food industry, pharmaceutical industry and textile dyeing industry has the following common problems:
1. Powder, liquid, granule, paste and different forms of ingredients may be used in different combinations for production; each type of ingredients needs to use one special metering device for metering, and a metering device for metering powder ingredients is not suitable for metering liquid ingredients; different metering devices and weighing devices cannot be interlinked, resulting in a wide range of special machines and large investment.
2. It is difficult to achieve data communication between different metering and weighing devices, or to achieve the preparation of different forms of ingredients of one same formula in one system.
3. Ingredient types need to be frequently replaced or expanded, however, it is difficult to expand the arrangement of special metering devices and weighing devices, or to replace or clean the storage containers in the metering or weighing devices.
4. Each batch of production size varies widely subject to different customization needs, order changes or use of different types of ingredients, for example, sometimes need to produce 100 kg, sometimes only 0.001 kg, showing a huge difference of 100,000 times; it is difficult to design a system that can satisfy amount demand and accuracy requirements.
5. If precision metering of powder ingredients cannot meet the needs, powder ingredients can be mixed with water or solvent into a lower concentration of liquid and then metered to reach the target accuracy, however, since one metering device can simply be used for metering one type of ingredients, a device for accommodating powder ingredients cannot be used for accommodation liquid ingredients, complicating the handling procedure.
6. To face the change in the market of trending to various types with small amounts, conventional designs can not immediately respond, resulting in a high human error rate.

Therefore, it is desirable to provide an intelligent metering system that eliminates the drawbacks of the conventional designs.

CN 203247415 U discloses a combined automatic liquid metering and dyeing system, comprising at least a liquid metering module for measuring the required dyeing liquid, a container input module for placing a plurality of receiving containers, a receiving container and a turntable module. A weighing device is transported to a liquid metering module to receive the dye solution and to output the same. Further, a container output module is provided. A storage container for storing the metered dye liquor delivered from the carousel module is provided and a dyeing module puts the newly adjusted dye liquor into the container where the textile is placed in advance to perform dyeing. The said units are connected, and a control unit is used to control the operation of each module, and at the same time.

### SUMMARY OF THE INVENTION

The present invention has been accomplished under the circumstances in view. The present invention to provide an intelligent modular metering system, which allows different forms or types of ingredients of one same formula to be metered in the intelligent modular metering system.

The present invention to provide an intelligent modular metering system, which allows changing or increasing the number of ingredients, provides diversified metering control, unlimited expansion of modular component parts and a basic architecture of the Internet of Things practical for remote control.

To achieve this and other objects of the present invention, an intelligent modular metering system according to claim 1 is provided. The intelligent modular metering system comprises at least one storage device, a plurality of first storage containers, a plurality of second storage containers, a delivery device, a plurality of first metering units, a plurality of second metering units, a first conveyor unit, a second conveyor unit, and a plurality of receptacles. Each storage device each defines therein a plurality of storage compartments. The first storage containers and the second storage containers are adapted for storing different ingredients and removably placed in the storage compartments of the at least one storage device. The delivery device is disposed near the storage device, and adapted for delivering the first storage containers and the second storage container. The first metering units and the second metering units are respectively disposed near the storage device. The first conveyor unit is disposed near the delivery device, the first metering units and the second metering units, and adapted for receiving the first storage containers or second storage containers from the delivery device and conveying the received first storage containers or second storage containers to the mating or predetermined first metering units or second metering units. The second conveyor unit is disposed near the first metering units and the second metering units. The receptacles are to be conveyed by the second conveyor unit to the first metering units or second metering unit.

The intelligent modular metering system further comprises control unit electrically coupled with the delivery device, the first metering units, the second metering units, the first conveyor unit and the second conveyor unit. The control unit controls the delivery device and the first conveyor unit with predetermined instructions to deliver the first storage containers and the second storage container to the first metering units or second metering units, also controls the second conveyor unit to deliver the receptacles to the first metering units or second metering units, and also controls the second conveyor unit to deliver the receptacles to a predetermined location to complete the recipe after the first storage containers and the second storage containers discharged the respective metered ingredients into the respective receptacles.

The first storage containers are adapted for storing liquid ingredients, each comprising a discharging chute arranged at a bottom side thereof and selected from the group of solenoid valve, pneumatic valve, proportional valve, manual valve and syringe; said first metering units each comprise a control turntable rotatably by an external force, said control turntable comprising a first contact for the connection of a solenoid valve, a pneumatic connector for the connection of a pneumatic valve, a second contact for the connection of a proportional valve, a cylinder connector for the connection of a manual valve and a servo motor robotic arm for the connection of a syringe, said first contact, said pneumatic connector, said second contact, said cylinder connector and said servo motor robotic arm being respectively electrically coupled to said control unit.

Preferably, the first storage containers, the second storage containers and the receptacles are respectively equipped with a wireless communication memory card for wireless communication with the metering units. The wireless communication memory card can be, for example, a RFID tag for recording ingredient name and various metering characteristics and information, combining with the today's technology of Internet of Things for remote control logistics.

When compared to prior art techniques, the invention allows different forms of ingredients of one same formula to be metered in the intelligent modular metering system. The storage containers and metering receptacles are modularized for unlimited system capacity expansion and respectively equipped with a wireless communication memory card for storing and metering different forms of ingredients, creating a basic architecture of the Internet of Things practical for remote control.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic elevational view of an intelligent modular metering system in accordance with the present invention.
FIG. 2A illustrates the structure of one first storage container and one receptacle for the intelligent modular metering system in accordance with the present invention.
FIG. 2B illustrates the structure of the control turntable of one first metering unit of the intelligent modular metering system in accordance with the present invention.
FIG. 3A is a schematic drawing illustrating an operation status of one second storage container of the intelligent modular metering system in accordance with the present invention (I).
FIG. 3B corresponds to FIG. 3A, illustrating the vibrator vibrated.
FIG. 4 is a schematic top elevational view of the delivery device of the intelligent modular metering system in accordance with the present invention.
FIG. 5 is a schematic elevational view of an alternate form of the intelligent modular metering system in accordance with the present invention.

### DETAILED DESCRIPTION OF THE PREFERRED EMBODIMENT

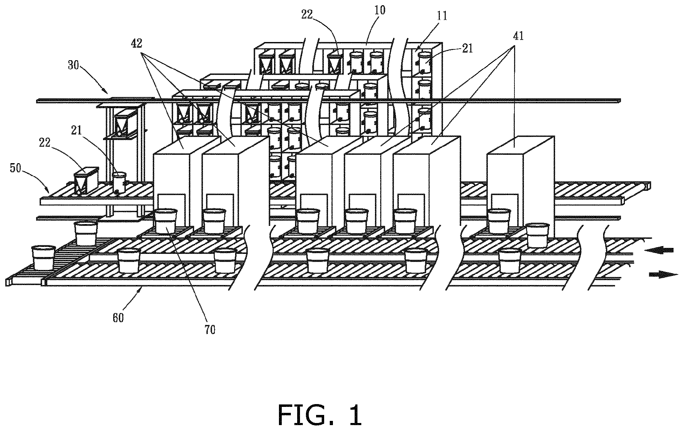

Referring to FIG. 1, an intelligent modular metering system in accordance with the present invention is shown. The intelligent modular metering system comprises a plurality of storage devices **10** each defining therein a plurality of storage compartments **11**; a plurality of first storage containers **21** and second storage containers **22** movably placed in the storage compartments **11** for storing different ingredients; a delivery device **30** disposed adjacent to the storage devices **10** and adapted for delivering the first storage containers **21** or the second storage containers **22**, a plurality of first metering units **41** and second metering units **42** respectively disposed near the storage devices **10**, a first conveyor unit **50** disposed near the delivery device **30**, a second conveyor unit **60** disposed near the first metering units **41** and the second metering units **42**, and a plurality of receptacles **70.** The first metering units **41**, the second metering units **42** and the first conveyor unit **50** are adapted for receiving each first storage containers **21** or second storage containers **22** from the delivery device **30** and delivering the received first storage container **21** or second storage container **22** to the mating first metering unit **41** or second metering unit **42.** The second conveyor unit **60** is adapted for receiving the receptacles **70** and delivering the receptacles **70** to the first metering units **41** or the second metering units **42.**

In the present preferred embodiment, the first storage containers **21** are adapted for storing liquid ingredients, and the second storage containers **22** are adapted for storing powder ingredients.

In the present preferred embodiment, the first metering units **41** are configured to mate with the first storage containers **21**, for metering the storage liquid ingredients of the first storage container **21**; the second metering units **42** are configured to mate with the second storage containers **22** for metering the storage powder ingredients of the second storage container **22.**

Further, a control unit (not shown) is electrically connected with the delivery device **30**, the first metering unit **41**, the second metering unit **42**, the first conveyor unit **50** and the second conveyor unit **60.** In the present preferred embodiment, the control unit can be a computer or control circuit that control that controls the delivery device **30** with instructions according to pre-built data or control parameters, causing the delivery device **30** to pick up the first storage containers **21** or the second storage containers **22** from the storage device **10** and then to place the first storage containers **21** or second storage containers **22** on the first conveyor unit **50** for delivering to the mated first metering unit **41** or second metering unit **42.** The control unit also controls the second conveyor unit **60** to convey the receptacles **70** to the first metering units **41** or the second metering units **42** for allowing the liquid ingredients of the first storage containers **21** to be metered and dispensed into the receptacle **70** in the first metering units **41** and the powder ingredients of the second storage containers **22** to be metered and dispensed into the receptacle **70** in the second metering units **42.** Thereafter, the control unit controls the second conveyor unit **60** to convey the receptacles **70** to a predetermined location to complete the recipe. The aforesaid liquid and powder ingredients are simply examples for understanding the features of the present invention, and other ingredients such as granule ingredients or paste ingredients can also be carried out in the manner described above.

The above-described preferred embodiment of the present invention allows powder, liquid, granule, paste or any other different forms of ingredients of one same formula to be metered in the intelligent modular metering system; the storage containers or discharging chutes of the present invention are designed for use in the intelligent modular metering system to adopt different forms of ingredients, such as powder, liquid, granular or paste ingredients and to expand the capacity of the system; the storage containers and metering receptacles are modularized for unlimited system capacity expansion and respectively equipped with a wireless communication memory card for storing and metering different forms of ingredients, such as powder, liquid, granular or paste ingredients, creating a basic architecture of the Internet of Things practical for remote control.

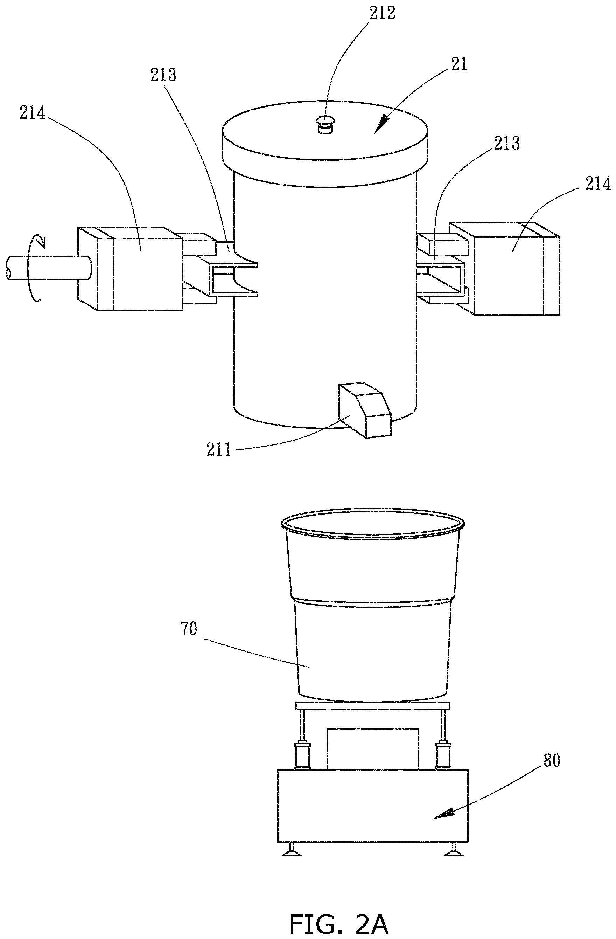

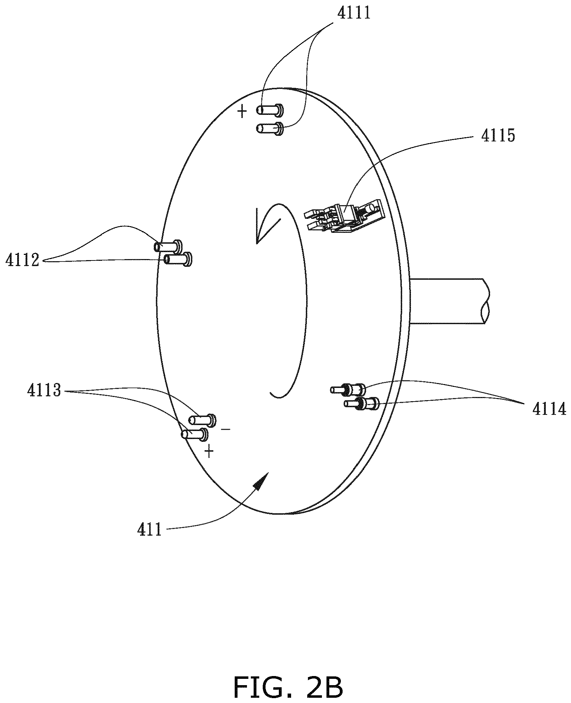

Referring to FIGS. 2A,2B, in one embodiment of the present invention, the first storage containers **21** are adapted for storing liquid ingredients, each comprising a discharging chute **211** at a bottom side thereof. The discharging chute **211** can be selected from the group of solenoid valve, pneumatic valve, proportional valve, manual valve and syringe. If syringe is used, it can be the form described in Taiwan Patent Numbers M459248 and 1454666 that are invented by the present inventor. The first metering units **41** each comprise a control turntable **411** rotatable by an external force. The control turntable **411** comprises a first contact **4111** for the connection of the solenoid valve, a pneumatic connector **4112** for the connection of the pneumatic valve, a second contact **4113** for the connection of the proportional valve, a cylinder connector **4114** for the connection of the manual valve, a servo motor robotic arm **4115** for the connection of the syringe. Further, the first contact **4111**, the pneumatic connector **4112**, the second contact **4113**, the cylinder connector **4114** and the servo motor robotic arm **4115** are respectively electrically coupled to the control unit.

Thus, according to the type of the discharging chute **211** of the first storage container **21** that can be a solenoid valve, pneumatic valve, proportional valve, manual valve or syringe, the control turntable **411** can be rotated to a particular angle to let the mating connector (drive means), i.e., the first contact **4111**, pneumatic connector **4112**, second contact **4113**, cylinder connector **4114** or servo motor robotic arm **4115** be electrically coupled to the discharging chute **211** (solenoid valve, pneumatic valve, proportional valve, manual valve or syringe), thereby constituting a modular structure. Thus, through the control turntable **411**, the control unit can accurately control the discharging chute **211** to discharge ingredients, completing precise metering of the liquid ingredients of the first storage containers **21.**

After the discharging chute **211** discharged a liquid ingredient to one receptacle **70**, the receptacle **70** is then placed on a weighing device **80** of one first metering unit **41.** The weighing device **80** of each first metering unit **41** can be, for example, a weighing scale for accurately weighing the liquid metering.

In the preferred embodiment of the present invention, each first storage container **21** further comprises a breather valve **212** for convection between the inside and the outside of the first storage container **21** so that when the discharging chute **211** is discharging the liquid ingredient, the pressure inside the discharging chute **211** can be maintained in balance with the pressure outside the discharging chute **211**, smoothening the liquid ingredient discharging operation.

Referring to FIGS. 2A and 2B, in the preferred embodiment of the present invention, each first storage container **21** further comprises at least one protruding portion **213** protruded from the periphery, and at least one rotating agitator **214** electrically connected to the control unit and controllable by the control unit to secure and rotate the at least one protruding portion **213**, agitating the contained liquid ingredient into a uniform status. The rotating agitator **214** can be a hydraulic or pneumatic mechanism operable to secure and rotate the at least one protruding portion **213** of the first storage container **21.** Preferably, the first storage container **21** comprises two protruding portions **213** symmetrically disposed at two opposite lateral sides, and two rotating agitators **214** for securing and rotating the two protruding portions **213** to agitate the liquid ingredient in the first storage container **21** into a uniform condition.

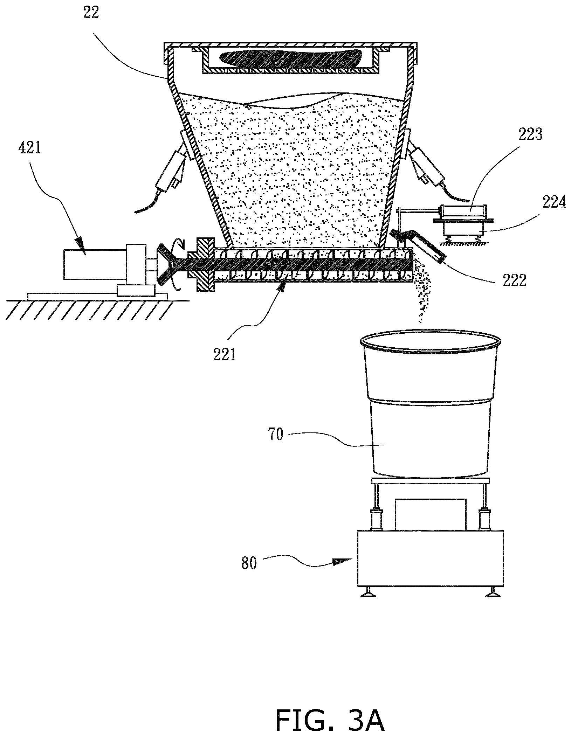

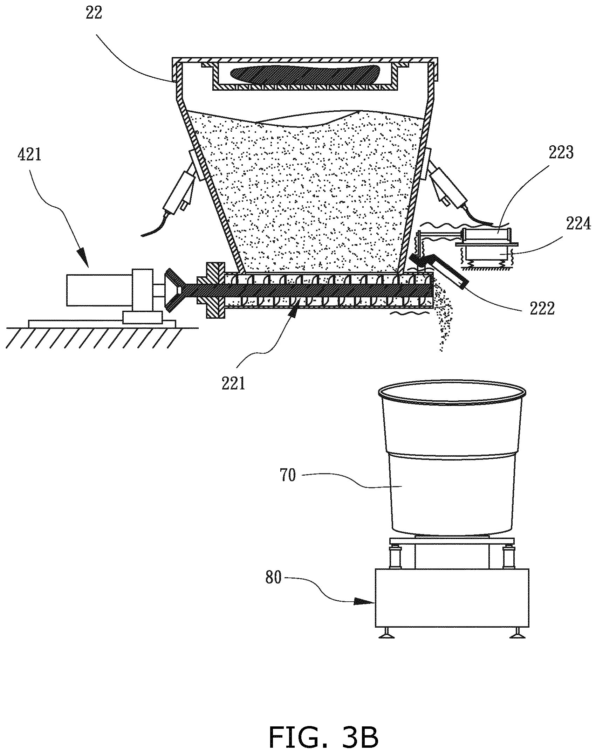

Referring to FIGS. 3A and 3B, the second storage containers **22** are adapted for storing powder ingredients, each comprising a screw conveyor **221** arranged at a bottom side thereof. The screw conveyor **221** comprises an end cover **222**, and an end cover drive source **223** that can be a hydraulic or pneumatic device adapted for closing/opening the end cover **222.** The second metering units **42** are adapted for metering powder ingredients, each comprising a drive unit **421** electrically connected to the control unit and connectable to one end of the conveying screw of the screw conveyor **221** remote from the end cover **222** and controllable by the control unit to rotate the conveying screw of the screw conveyor **221.** Further, the drive unit **421** can be a geared servo motor.

Thus, when the end cover drive source **223** is controlled to open the end cover **222**, the control unit controls the drive unit **421** to rotate the conveying screw of the screw conveyor **221** according to predetermined metering parameters, thereby conveying accurately metered powder ingredients out of the second storage container **22** into one receptacle **70.**

After discharge of precisely metered powder ingredients from the screw conveyor **221** into the receptacle **70**, the receptacle **70** is transferred to one second metering unit **42**, which is equipped with a weighing device **80** for weighing. The weighing device **80** of each receptacle **70** can be a weighing scale for controlling the metering of powder ingredients accurately.

In the present preferred embodiment, each second storage container **22** further comprises a vibrator **224** joined to the end cover drive source **223.** During operation of the end cover drive source **223**, the vibrator **224** is vibrated, shaking the powder ingredients out of the output end of the screw conveyor **221.**

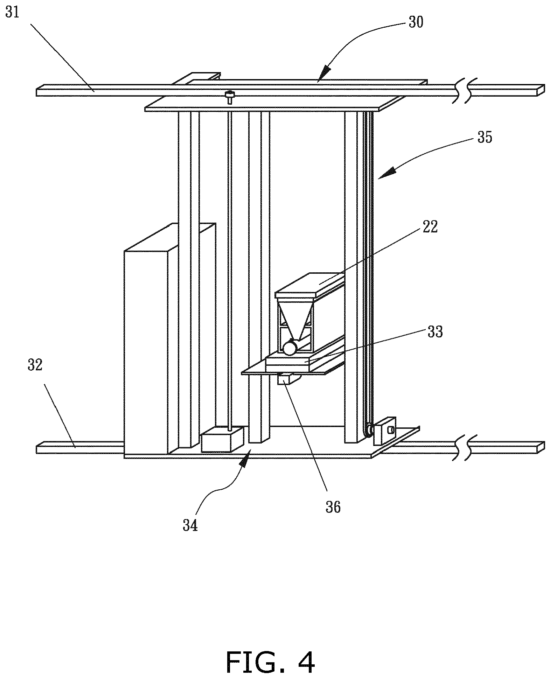

As illustrated in FIG. 1 and FIG. 4, the delivery device **30** can be, for example, a small recreation vehicle (SRV), comprising a top rail **31**, a bottom rail **32**, a robotic arm slide **33** mounted between the top rail **31** and the bottom rail **32**, an X-axis drive unit **34**, a Y-axis drive unit **35**, and a Z-axis drive unit **36.** The robotic arm slide **33** is adapted for carrying the first storage container **21** or the second storage container **22.** The X-axis drive unit **34**, the Y-axis drive unit **35** and the Z-axis drive unit **36** is adapted for driving the robotic arm slide **33** to move in the X-axis, Y-axis and/or Z-axis direction.

Thus, the delivery device **30** can easily and accurately take the first storage container **21** or the second storage container **22** out of the storage device **10**, and then easily and accurately place the first storage container **21** or the second storage container **22** on the first conveyor unit **50.**

In one embodiment of the present invention, the first conveyor unit **50** and the second conveyor unit **60** are belt conveyors.

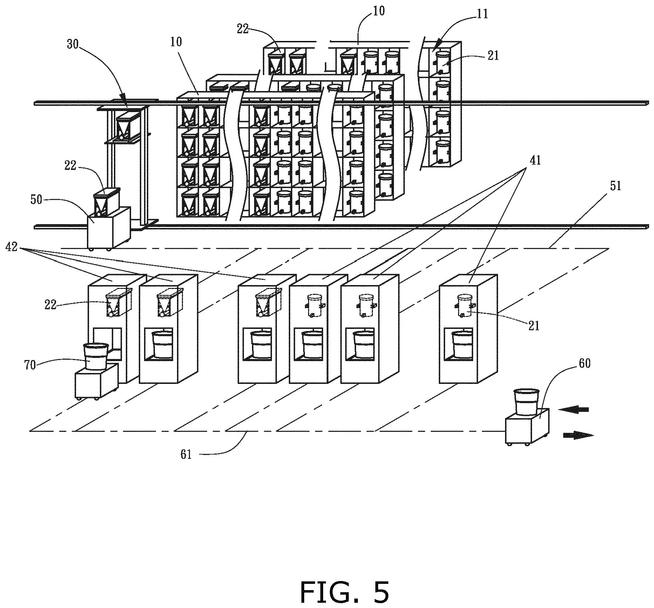

In another embodiment of the present invention shown in FIG. 5, the first conveyor units **50** and the second conveyor units **60** are automated guided vehicles (AGV). In this embodiment, the intelligent modular metering system further comprises linear guideways **51**,**61**. The first conveyor units **50** and the second conveyor units **60** are controlled to move along the linear guideways **51**,**61**. As illustrated in FIG. 5, multiple linear guideways **51**,**61** are arranged on the floor so that the first conveyor units **50** can be moved along the linear guideways **51** and the second conveyor units **60** can be moved along the linear guideways **61.**

Referring to FIG. 1 again, the first storage containers **21** and the second storage containers **22** are respectively equipped with a wireless communication memory card, for example, Radio Frequency Identification (RFID) tag adapted for recording ingredient name and various metering characteristics.

Further, the receptacles **70** are also respectively equipped 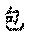 with a RFID tag to create a basic architecture of the Internet of Things.

Although particular embodiments of the invention have been described in detail for purposes of illustration, various modifications and enhancements may be made without departing from the scope of the invention. Accordingly, the invention is not to be limited except as by the appended claims.

## Claims

1. An intelligent modular metering System, comprising:
at least one storage device (10) each defining therein a plurality of storage compartments (11);
a plurality of first storage containers (21) and second storage containers (22) adapted for storing different ingredients and removably placed in said storage compartments (11) of said at least one storage device (10);
a delivery device (30) disposed near said storage device (10) and adapted for delivering said first storage containers (21) and said second storage container (22);
a plurality of first metering units (41) and a plurality of second metering units (42) respectively disposed near said storage device (10);
a first conveyor unit (50) disposed near said delivery device (30), said first metering units (41) and said second metering units (42) and adapted for receiving said first storage containers (21) or said second storage containers (22) being delivered by said delivery device (30) and conveying the received said first storage containers (21) or said second storage containers (22) to the mating or predetermined said first metering units (41) or said second metering units (42);
a second conveyor unit (60) disposed near said first metering units (41) and said second metering units (42); and
a plurality of receptacles (70) to be conveyed by said second conveyor unit (60) to said first metering units (41) or said second metering units (42); and a control unit electrically coupled with said delivery device (30), said first metering units (41), said second metering units (42), said first conveyor unit (50) and said second conveyor
unit (60), and adapted for controlling said delivery device (30) and said first conveyor unit (50) with predetermined instructions to deliver said first storage containers (21) and said second storage container (22) to said first metering units
(41) or said second metering units (42) and also for controlling said second conveyor unit (60) to deliver said receptacles (70) to said first metering units (41) or said second metering units
(42) and also for controlling said second conveyor unit (60) to deliver said receptacles (70) to a predetermined location to complete the recipe after said first storage containers (21) and said second storage containers (22) discharged the respective metered ingredients into the respective said receptacles (70),
wherein
said first storage containers (21) are adapted for storing liquid ingredients, each comprising a discharging chute (211) arranged at a bottom side thereof and selected from the group of solenoid valve, pneumatic valve, proportional valve, manual valve and syringe; **characterised in that**
said first metering units (41) each comprise
a control turntable (411) rotatably by an external force, said control turntable (411) comprising a first contact for the connection of a solenoid valve, a pneumatic connector (4112) for the connection of a pneumatic valve, a second contact (4113) for the connection of a proportional valve, a cylinder connector (4114) for the connection of a manual valve and a servo motor robotic arm (4115) for the connection of a syringe, said first contact, said pneumatic connector (4112), said second contact (4113), said cylinder connector (4114) and said servo motor robotic arm (4115) being respectively electrically coupled to said control unit.

2. The intelligent modular metering system as claimed in claim 1,
wherein said first storage containers (21) each comprise at least one protruding portion (213) protruded from the periphery thereof; the intelligent modular metering system further comprises at least one rotating agitator (214) electrically coupled to said control unit and controllable by said control unit to secure the said at least one protruding portion (213) of each said first storage container (21) and then to rotate the secured said first storage container (21).

3. The intelligent modular metering system as claimed in claim 1, wherein said second storage containers (22) are adapted for storing powder ingredients, each comprising a screw conveyor (221) arranged on a bottom side thereof, an end cover (222) movable to close/open an output end of said screw conveyor, and an end cover drive source (223) controllable to open/close said end cover (222); said second metering units (42) each comprise a drive unit electrically connected to said control unit and coupled to one end of a conveying screw of said screw conveyor (221) remote from said end cover (222) and controllable to rotate said conveying screw of said screw conveyor (221).

4. The intelligent modular metering system as claimed in claim 3, wherein each said second storage container (22) further comprises a vibrator (224) joined to the associating said end cover drive source (223) and adapted for vibrating said output end of the associating said screw conveyor (221).

5. The intelligent modular metering system as claimed in claim 1 or 3, wherein said first metering units (41) and said second metering units (42) each comprise a weighing device (80); said
receptacles are respectively placed on the said weighing devices (80) of the respective said first metering units (41) or said second metering units (42).

6. The intelligent modular metering system as claimed in claim 1, wherein said delivery device (30) is a small creational vehicle (SRV).

7. The intelligent modular metering system as claimed in claim 6, wherein said delivery device (30) comprises a top rail (31), a bottom rail (32), a robotic arm slide (33), slidably mounted between said top rail (31) and said bottom rail (32) and adapted for carrying one said first storage container or one said second storage container (22), an X-axis drive unit (34) adapted for moving said robotic arm slide (33) in X-axis direction, a Y-axis drive unit (35) adapted for moving said robotic arm slide (33) in Y-axis direction and a Z-axis drive unit (36) adapted for moving said robotic arm slide (33) in Z-axis direction.

8. The intelligent modular metering system as claimed in claim 1, 6 or 7, wherein said first conveyor unit (50) and said second conveyor unit (60) are beit conveyors.

9. The intelligent modular metering system as claimed in claim 1, 6 or 7, wherein said first conveyor unit (50) and said second conveyor unit (60) are automated guided vehicles.

10. The intelligent modular metering system as claimed in claim 1, further comprising a plurality of linear guideways (51, 61) for supporting and guiding said first conveyor units (50) and said second conveyor units (60) to move linearly.

11. The intelligent modular metering system as claimed in claim 1, wherein said first storage containers (21), said second storage containers (22) and said receptacles are respectively equipped
with a wireless communication memory card.

12. The intelligent modular metering system as claimed in claim 1, wherein said wireless communication memory card is a Radio-Frequency Identification (RFID) tag.

## Patentansprüche

1. Ein intelligentes modulares Messsystem, umfassend:
mindestens eine Speichervorrichtung (10), die jeweils darin mehrere Ablagefächer (11) definieren;
mehrere erste Speicherbehälter (21) und zweite Speicherbehälter (22), die zum Speichern verschiedener Inhaltsstoffe geeignet sind und entfernbar in den besagten Ablagefächern (11) der besagten mindestens einen Speichervorrichtung (10) gestellt sind;
eine Liefereinrichtung (30), die in der Nähe der besagten Speichervorrichtung (10) angeordnet und zum Liefern der besagten ersten Speicherbehälter (21) und der besagten zweiten Speicherbehälter (22) geeignet ist;
mehrere erste Messeinheiten (41) und mehrere zweite Messeinheiten (42), die jeweils in der Nähe der besagten Speichervorrichtung (10) angeordnet sind;
eine erste Fördereinheit (50), die in der Nähe der besagten Liefereinrichtung (30), der besagten ersten Messeinheiten (41) und der besagten zweiten Messeinheiten (42) angeordnet ist und zum Empfangen der besagten ersten Speicherbehälter (21) oder der besagten zweiten Speicherbehälter (22), die durch die besagte Liefereinrichtung (30) geliefert werden, geeignet ist, und die empfangenen besagten ersten Speicherbehälter (21) oder besagten zweiten Speicherbehälter (22) zu den passenden oder vorbestimmten besagten ersten Messeinheiten (41) oder besagten zweiten Messeinheiten (42) fördert;
eine zweite Fördereinheit (60), die in der Nähe der besagten ersten Messeinheiten (41) und besagten zweiten Messeinheiten (42) angeordnet ist; und
mehrere Behälter (70), die von der besagten zweiten Fördereinheit (60) zu den besagten ersten Messeinheiten (41) oder besagten zweiten Messeinheiten (42) zu fördern sind; und
eine Steuereinheit, die elektrisch mit der besagten Liefereinrichtung (30), den besagten ersten Messeinheiten (41), den besagten zweiten Messeinheiten (42), der besagten ersten Fördereinheit (50) und der besagten zweiten Fördereinheit (60) gekoppelt ist und zum Steuern der besagten Liefereinrichtung (30) und der besagten ersten Fördereinheit (50) mit vorgegebenen Anweisungen zum Liefern der besagten ersten Speicherbehälter (21) und besagten zweiten Speicherbehälter (22) an die besagten ersten Messeinheiten (41) oder besagten zweiten Messeinheiten (42) und außerdem zum Steuern der besagten zweiten Fördereinheit (60) zum Liefern der besagten Behälter (70) an die besagten ersten Messeinheiten (41) oder die besagten zweiten Messeinheiten (42) und außerdem zum Steuern der besagten zweiten Fördereinheit (60) zum Liefern der besagten Behälter (70) an eine vorbestimmte Position zum Vervollständigen der Rezeptur, nachdem die besagten ersten Speicherbehälter (21) und die besagten zweiten Speicherbehälter (22) die jeweiligen gemessenen Inhaltsstoffe in die jeweiligen besagten Behälter (70) abgelassen haben, geeignet ist, wobei die besagten ersten Speicherbehälter (21) zum Speichern flüssiger Inhaltsstoffe geeignet sind und jeweils eine an ihrer Unterseite angeordnete Entladerutsche (211) aufweisen und aus der Gruppe von Magnetventil, pneumatischem Ventil, Proportionalventil, Handventil und Spritze ausgewählt sind; **dadurch gekennzeichnet, dass**
die besagten ersten Messeinheiten (41) jeweils eine Steuerungsdrehscheibe (411), die durch eine äußere Kraft drehbar ist, umfassen, wobei die besagte Steuerungsdrehscheibe (411) einen ersten Kontakt zum Anschließen eines Magnetventils, einen pneumatischen Anschluss (4112) zum Anschließen eines pneumatischen Ventils, einen zweiten Kontakt (4113) zum Anschließen eines Proportionalventils, einen Zylinderanschluss (4114) zum Anschließen eines Handventils und einen Servomotor-Roboterarm (4115) zum Anschließen einer Spritze umfasst, wobei der besagte erste Kontakt, der besagte pneumatische Anschluss (4112), der besagte zweite Kontakt (4113), der besagte Zylinderanschluss (4114) und der besagte Servomotor-Roboterarm (4115) jeweils elektrisch mit der besagten Steuereinheit gekoppelt sind.

2. Intelligentes modulares Messsystem nach Anspruch 1, bei dem die besagten ersten Speicherbehälter (21) jeweils mindestens einen von ihrem Umfang vorstehenden Abschnitt (213) aufweisen, wobei das intelligente modulare Messsystem ferner mindestens ein rotierendes Rührwerk (214) umfasst, das elektrisch mit der besagten Steuereinheit gekoppelt und von der besagten Steuereinheit steuerbar ist, um den besagten mindestens einen vorstehenden Abschnitt (213) jedes besagten ersten Speicherbehälters (21) zu sichern und dann den gesicherten besagten ersten Vorratsbehälter (21) zu drehen.

3. Intelligentes modulares Messsystem nach Anspruch 1, bei dem die besagten zweiten Speicherbehälter (22) zum Speichern von pulverförmigen Inhaltsstoffen geeignet sind und jeweils einen an ihrer Unterseite angeordneten Schneckenförderer (221), eine Endabdeckung (222), die zum Schließen/Öffnen eines Ausgangsendes des jeweiligen besagten Schneckenförderers beweglich ist, und eine zum Schließen/Öffnen der jeweiligen besagten Endabdeckung (222) steuerbare Endabdeckungs-Antriebsquelle (223) umfassen; wobei die besagten zweiten Messeinheiten (42) jeweils eine Antriebseinheit, die elektrisch mit der besagten Steuereinheit verbunden und mit einem entfernt zur besagten Endabdeckung (222) liegenden Ende der Förderschnecke des besagten Schneckenförderers (221) gekoppelt und zum Drehen der besagten Förderschnecke des besagten Schneckenförderers (221) steuerbar ist, umfassen.

4. Intelligentes modulares Messsystem nach Anspruch 3, bei dem jeder besagte zweite Vorratsbehälter (22) ferner einen Rüttler (224), der mit der zusammenhängenden besagten Endabdeckungs-Antriebsquelle (223) verbunden und zum Rütteln des besagten Ausgangsendes des zusammenhängenden besagten Schneckenförderers (221) geeignet ist, umfasst.

5. Intelligentes modulares Messsystem nach Anspruch 1 oder 3, bei dem die besagten ersten Messeinheiten (41) und die besagten zweiten Messeinheiten (42) jeweils eine Wiegeeinrichtung (80) umfassen; wobei die besagten Behälter jeweils auf die besagte Wiegeeinrichtung (80) der jeweiligen besagten ersten Messeinheiten (41) oder besagten zweiten Messeinheiten (42) gestellt sind.

6. Intelligentes modulares Messsystem nach Anspruch 1, bei dem die besagte Liefereinrichtung (30) ein kleines Freizeitfahrzeug (small recreational vehicle; SRV) ist.

7. Intelligentes modulares Messsystem nach Anspruch 6, bei dem die besagte Liefereinrichtung (30) eine obere Schiene (31), eine untere Schiene (32), einen verschiebbar zwischen der besagten oberen Schiene (31) und der besagten unteren Schiene (32) angebrachten und zum Tragen eines der besagten ersten Speicherbehälter oder eines der besagten zweiten Speicherbehälter (22) geeigneten Roboterarmschlitten (33), eine zum Bewegen des besagten Roboterarmschlittens (33) in X-Achsen-Richtung geeignete X-Achsen-Antriebseinheit (34), eine zum Bewegen des besagten Roboterarmschlittens (33) in Y-Achsen-Richtung geeignete Y-Achsen-Antriebseinheit (35) und eine zum Bewegen des besagten Roboterarmschlittens (33) in Z-Achsen-Richtung geeignete Z-Achsen-Antriebseinheit (36) umfasst.

8. Intelligentes modulares Messsystem nach Anspruch 1, 6 oder 7, bei dem die besagte erste Fördereinheit (50) und die besagte zweite Fördereinheit (60) Bandförderer sind.

9. Intelligentes modulares Messsystem nach Anspruch 1, 6 oder 7, bei dem die besagte erste Fördereinheit (50) und die besagte zweite Fördereinheit (60) fahrerlose Transportfahrzeuge sind.

10. Intelligentes modulares Messsystem nach Anspruch 1, ferner umfassend mehrere lineare Führungsbahnen (51, 61) zum Tragen und Führen der besagten ersten Fördereinheit (50) und der besagten zweiten Fördereinheit (60), damit diese linear bewegt werden.

11. Intelligentes modulares Messsystem nach Anspruch 1, bei dem die besagten ersten Speicherbehälter (21), die besagten zweiten Speicherbehälter (22) und die besagten Behälter jeweils mit einer drahtlosen Kommunikationsspeicherkarte ausgestattet sind.

12. Intelligentes modulares Messsystem nach Anspruch 1, bei dem die besagte drahtlose Kommunikationsspeicherkarte ein RFID (radio-frequency identification)-Tag ist.

## Revendications

1. Système de dosage modulaire intelligent, **caractérisé par le fait qu'**il comprend :
au moins un dispositif de stockage (10) chacun définissant à l'intérieur une pluralité de compartiments de stockage (11) ;
une pluralité de premiers récipients de stockage (21) et de seconds récipients de stockage (22) adaptés pour stocker différents ingrédients et placés de manière amovible dans lesdits compartiments de stockage (11) dudit ou desdits dispositifs de stockage (10) ;
un dispositif de distribution (30) disposé à proximité dudit dispositif de stockage (10) et adapté pour distribuer lesdits premiers récipients de stockage (21) et lesdits seconds récipients de stockage (22) ;
une pluralité de premières unités de dosage (41) et une pluralité de secondes unités de dosage (42) respectivement disposées à proximité dudit dispositif de stockage (10) ;
une première unité de convoyage (50) disposée à proximité dudit dispositif de distribution (30), desdites premières unités de dosage (41) et desdites secondes unités de dosage (42) et adaptée pour recevoir lesdits premiers récipients de stockage (21) ou lesdits seconds récipients de stockage (22) étant distribués par ledit dispositif de distribution (30) et convoyant lesdits premiers récipients de stockage (21) ou lesdits seconds récipients de stockage (22) reçus vers lesdites premières unités de dosage (41) ou lesdites secondes unités de dosage (42) d'appariement ou prédéterminées ;
une seconde unité de convoyage (60) disposée à proximité desdites premières unités de dosage (41) et desdites secondes unités de dosage (42) ; et
une pluralité de réceptacles (70) à convoyer par ladite seconde unité de convoyage (60) vers lesdites premières unités de dosage (41) ou lesdites secondes unités de dosage (42) ; et
une unité de commande couplée électriquement audit dispositif de distribution (30), auxdites premières unités de dosage (41), auxdites secondes unités de dosage (42), à ladite première unité de convoyage (50) et à ladite seconde unité de convoyage (60), et adaptée pour commander ledit dispositif de distribution (30) et ladite première unité de convoyage (50) avec des instructions prédéterminées pour distribuer lesdits premiers récipients de stockage (21) et lesdits seconds récipients de stockage (22) vers lesdites premières unités de dosage (41) ou lesdites secondes unités de dosage (42) et aussi pour commander ladite seconde unité de convoyage (60) pour distribuer lesdits réceptacles (70) vers lesdites premières unités de dosage (41) ou lesdites secondes unités de dosage (42) et aussi pour commander ladite seconde unité de convoyage (60) pour distribuer lesdits réceptacles (70) à un emplacement prédéterminé pour compléter la formule après que lesdits premiers récipients de stockage (21) et lesdits seconds récipients de stockage (22) aient déchargé les ingrédients dosés respectifs dans lesdits réceptacles respectifs (70),
lesdits premiers récipients de stockage (21) sont adaptés pour stocker des ingrédients liquides, comprenant chacun une goulotte de décharge (211) disposée sur un côté inférieur de ceux-ci et sélectionnée dans le groupe d'électrovanne, vanne pneumatique, vanne proportionnelle, vanne manuelle et seringue ; **caractérisé en ce que**
lesdites premières unités de dosage (41) comprennent chacune une plaque tournante de commande (411) en rotation par une force externe, ladite plaque tournante de commande (411) comprenant un premier contact pour le raccordement d'une électrovanne, un connecteur pneumatique (4112) pour le raccordement d'une vanne pneumatique, un second contact (4113) pour le raccordement d'une vanne proportionnelle, un connecteur de cylindre (4114) pour le raccordement d'une vanne manuelle et un bras robotique de servomoteur (4115) pour le raccordement d'une seringue, ledit premier contact, ledit connecteur pneumatique (4112), ledit second contact (4113), ledit connecteur de cylindre (4114) et ledit bras robotique de servomoteur (4115) étant respectivement couplés électriquement à ladite unité de commande.

2. Système de dosage modulaire intelligent selon la revendication 1, **caractérisé par le fait que** lesdits premiers récipients de stockage (21) comprennent chacun au moins une partie saillante (213) dépassant de la périphérie de ceux-ci ; le système de dosage modulaire intelligent comprend en outre au moins un agitateur rotatif (214) couplé électriquement à ladite unité de commande et commandable par ladite unité de commande pour sécuriser ladite ou lesdites parties saillantes (213) de chacun desdits premiers récipients de stockage (21) et puis pour faire tourner lesdits premiers conteneurs de stockage sécurisés (21).

3. Système de dosage modulaire intelligent selon la revendication 1, **caractérisé par le fait que** lesdits seconds récipients de stockage (22) sont adaptés pour stocker des ingrédients en poudre, comprenant chacun un convoyeur à vis (221) placés sur leur côté inférieur, un couvercle d'extrémité (222) mobile pour fermer/ouvrir une extrémité de sortie dudit convoyeur à vis, et une source d'entraînement du couvercle d'extrémité (223) contrôlable pour ouvrir/fermer ledit couvercle d'extrémité (222) ; lesdites secondes unités de dosage (42) comprennent chacune une unité d'entraînement raccordée électriquement à ladite unité de commande et couplée à une extrémité d'une vis de transport dudit convoyeur à vis (221) éloignée dudit couvercle d'extrémité (222) et contrôlable pour faire tourner ladite vis de transport dudit convoyeur à vis (221).

4. Système de dosage modulaire intelligent selon la revendication 3, **caractérisé par le fait que** chacun desdits seconds récipients de stockage (22) comprend en outre un vibrateur (224) joint à ladite source d'entraînement du couvercle d'extrémité (223) associée et adapté pour faire vibrer ladite extrémité de sortie dudit convoyeur à vis (221) associé.

5. Système de dosage modulaire intelligent selon la revendication 1 ou 3, **caractérisé par le fait que** lesdites premières unités de dosage (41) et lesdites secondes unités de dosage (42) comprennent chacune un dispositif de pesage (80) ; lesdits réceptacles sont respectivement placés sur lesdits dispositifs de pesages (80) desdites premières unités de dosage (41) ou desdites secondes unités de dosage (42) respectives.

6. Système de dosage modulaire intelligent selon la revendication 1, **caractérisé par le fait que** ledit dispositif de distribution (30) est un petit véhicule récréatif (PVR).

7. Système de dosage modulaire intelligent selon la revendication 6, **caractérisé par le fait que** ledit dispositif de distribution (30) comprend un rail supérieur (31), un rail inférieur (32), une glissière de bras robotique (33), montée de manière coulissante entre ledit rail supérieur (31) et ledit rail inférieur (32) et adaptée pour transporter l'un desdits premiers récipients de stockage ou l'un lesdits seconds récipients de stockage (22), une unité d'entraînement d'axe X (34) adaptée pour déplacer ladite glissière de bras robotique (33) dans la direction d'axe X, une unité d'entraînement d'axe Y (35) adaptée pour déplacer ladite glissière de bras robotique (33) dans la direction d'axe Y et une unité d'entraînement d'axe Z (36) adaptée pour déplacer ladite glissière de bras robotique (33) dans la direction d'axe Z.

8. Système de dosage modulaire intelligent selon la revendication 1, 6 ou 7, **caractérisé par le fait que** ladite première unité de convoyage (50) et ladite seconde unité de convoyage (60) sont des convoyeurs à courroie.

9. Système de dosage modulaire intelligent selon la revendication 1, 6 ou 7, **caractérisé par le fait que** ladite première unité de convoyage (50) et ladite seconde unité de convoyage (60) sont des véhicules guidés automatisés.

10. Système de dosage modulaire intelligent selon la revendication 1, **caractérisé par le fait qu'**il comprend en outre une pluralité de guidages linéaires (51, 61) pour supporter et guider ladite première unité de convoyage et ladite seconde unité de convoyage (60) pour se déplacer linéairement.

11. Système de dosage modulaire intelligent selon la revendication 1, **caractérisé par le fait que** lesdits premiers récipients de stockage (21), lesdits seconds récipients de stockage (22) et lesdits réceptacles sont respectivement équipés d'une carte mémoire de communication sans fil.

12. Système de dosage modulaire intelligent selon la revendication 1, **caractérisé par le fait que** ladite carte mémoire de communication sans fil est une étiquette d'identification par radiofréquence (RFID).
